(19) **Europäisches Patentamt European Patent Office Office européen des brevets**

(11) **EP 4 530 309 A1**

(12) **EUROPEAN PATENT APPLICATION**

(43) Date of publication:
02.04.2025 Bulletin 2025/14

(21) Application number: 23200542.1

(22) Date of filing: 28.09.2023

(51) International Patent Classification (IPC):
$C08J\ 5/18^{(2006.01)}$ $C08F\ 210/04^{(2006.01)}$
$C08L\ 23/08^{(2025.01)}$

(52) Cooperative Patent Classification (CPC):
(C-Sets available)
C08J 5/18; C08F 210/16; C08J 2323/08 (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Borealis AG
1020 Vienna (AT)

(72) Inventors:
• WANG, Jingbo
4021 Linz (AT)

• ALABRUNE, Arnaud Francis
64210 Bidart (FR)
• POTTER, Elisabeth
4021 Linz (AT)
• NIEDERSUESS, Peter
4021 Linz (AT)
• OLRY, Camille
92400 Courbevoie (FR)

(74) Representative: Kador & Partner Part mbB
Corneliusstraße 15
80469 München (DE)

(54) **BIAXIALLY ORIENTED POLYETHYLENE FILM**

(57) The present invention relates to a biaxially oriented polyethylene film comprising a polyethylene composition comprising at least 50 wt.-% of an ethylene copolymer (A), based on the total weight of the polyethylene film, wherein the ethylene copolymer (A) has a density, determined according to ISO 1183, in the range of from 910 to 940 kg/m$^3$, a melt flow rate MFR$_2$, determined according to ISO 1133 at 190 °C and at a loading of 2.16 kg in the range of from 0.5 to 3.0 g/10min, a molecular weight distribution Mw/Mn, as determined according to GPC measurements, in the range of from 3.5 to 6.5, and a comonomer content, determined by quantitative nuclear-magnetic resonance ($^{13}$C NMR) spectroscopy, in the range of from 1 to 20 wt.-%. The invention further relates to the use of the biaxially oriented film in packaging applications. The above biaxially oriented polyethylene film has excellent stiffness, impact properties and transparency as well as processability.

**EP 4 530 309 A1**

(52) Cooperative Patent Classification (CPC): (Cont.)

C-Sets
**C08F 210/16, C08F 2/06;**
**C08F 210/16, C08F 4/6555;**
C08F 210/16, C08F 210/14, C08F 2500/02,
C08F 2500/12, C08F 2500/17, C08F 2500/26,
C08F 2500/27, C08F 2500/33, C08F 2500/34,
C08F 2500/39

**Description**

The present invention relates to a biaxially oriented polyethylene film comprising an ethylene copolymer base component with excellent stiffness, impact properties and transparency as well as processability.

**Background**

Conventional blown or cast polyethylene films are widely used in flexible packaging, either as stand-alone packaging or lamination films, such as stand-up pouches, detergent pouches, sachets, bags, heavy duty shipping sacks etc.

Polyethylene materials used for making films for the above purposes often suffer from lower stiffness, poorer optical properties and poorer heat resistance. Orientation (i.e. stretching) of (substrate) films, such as preparation of uniaxially or biaxially oriented films, is one approach to provide an improved stiffness and optical properties to polyethylene films.

US 2009/0286024 A1 discloses polyethylene-based films, and more particularly relates to biaxially oriented films comprising linear low density polyethylene obtained using a single-site catalyst, and also relates to linear low density polyethylene having improved processability.

WO 2021/079255 A1 discloses biaxially oriented polyethylene (BOPE) films for packaging applications with improved stretchability, the film comprising at least 60 wt.-% of a medium density polyethylene having: a density of from 0.94 to 0.95 g/cm$^3$, a melt index, $I_2$, as measured by ASTM D1238 at 190°C using a 2.16 kg load of from 0.2 to 5 g/10 min, and a molecular weight distribution, Mw/Mn, of from 10 to 50.

WO 2013/029233 A1 discloses a process for forming a biaxially oriented polyethylene film for flexible packaging, wherein the film provides high stiffness combined with toughness. The process comprises the steps of process for forming a biaxially oriented film comprising the steps of: a. selecting a polyolefin resin wherein said polyolefin resin comprises a linear low density polyethylene resin characterized by having from 9 to 35 wt.-% of the total weight of linear low density polyethylene resin eluting from a crystallization elution fractionation (CEF) at a temperature greater than 97.0°C; and a comonomer distribution ratio (CDR) of from 33 to 80 and a Mw ratio of from 0.15 to 0.45; b. forming a film from the polyolefin resin selected in step (a), c. orienting the film formed in step (b); wherein the film has an ultimate elongation at least 1.5 times greater in the MD as compared to the CD and the 2% secant modulus is a least 1.25 times greater in the CD as compared to the MD; and wherein the film has free residual shrinkage of less than 10% in the MD and less than 10% in the CD when exposed to a temperature of 90°C for 10 minutes.

In view of the above, it is an object of the present invention to provide a polyethylene film with improved stiffness, impact and optical properties as well as processability. It is also an object of the present invention to provide a polyethylene film having the desired combination of properties as outlined above, in particular having superior stretchability not only in the machine direction (MD), but also in the transverse direction (TD). Thus, films with improved stiffness and optical properties and good processability are desired.

**Summary of the invention**

The present invention is based on the surprising finding that the above objects can be achieved by a biaxially oriented polyethylene film comprising a polyethylene composition comprising at least 50 wt.-% of an ethylene copolymer (A), having:

a density, determined according to ISO 1183, in the range of from 910 to 940 kg/m$^3$,

a melt flow rate MFR$_2$, determined according to ISO 1133 at 190 °C and at a loading of 2.16 kg in the range of from 0.5 to 3.0 g/10min,

a molecular weight distribution Mw/Mn, as determined according to GPC measurements described herein, in the range of from 3.5 to 6.5, and

having a comonomer content, determined by quantitative nuclear-magnetic resonance ($^{13}$C NMR) spectroscopy, as described in the experimental section below, in the range of from 1 to 20 wt.-%.

**Detailed description of the invention**

The present invention found that a polyethylene composition comprising an ethylene copolymer (A) was very useful in preparing a biaxially oriented polyethylene film with improved stiffness, so that the films could be produced with high processability and efficiency. The films according to the present invention further had excellent impact and optical properties.

Polyethylene composition

The biaxially oriented polyethylene films according to the present invention comprises a polyethylene composition comprising at least 50 wt.-% of an ethylene copolymer (A) having:

a density, determined according to ISO 1183, in the range of from 910 to 940 kg/m$^3$,

a melt flow rate MFR$_2$, determined according to ISO 1133 at 190 °C and at a loading of 2.16 kg in the range of from 0.5 to 3.0 g/10min,

a molecular weight distribution Mw/Mn, as determined according to GPC measurements described herein, in the range of from 3.5 to 6.5, and

having a comonomer content, determined by quantitative nuclear-magnetic resonance ($^{13}$C NMR) spectroscopy, as described in the experimental section below, in the range of from 1 to 20 wt.-%.

Preferably, the polyethylene composition comprises at least 60 wt.-%, more preferably at least 70 wt.-%, even more preferably at least 80 wt.-%, still more preferably at least 90 wt.-% of the ethylene copolymer (A). The polyethylene composition may also essentially consist of the ethylene copolymer component (A), meaning that all polymeric components of the polyethylene composition consist of the ethylene copolymer (A) with only additives being further present.

The ethylene copolymer (A) has a comonomer content, determined by quantitative nuclear-magnetic resonance ($^{13}$C NMR) spectroscopy, as described in the experimental section below, in the range of from 1 to 20 wt.-%, preferably in the range of from 4 to 15 wt.-%, more preferably in the range of from 6 to 13 wt.-%, based on the total weight of the ethylene copolymer (A).

The density of ethylene copolymer (A), as determined according to ISO1183, may preferably be in the range of from 910 to 935 kg/m$^3$, more preferably be in the range of from 915 to 930 kg/m$^3$.

The MFR$_2$ of the ethylene copolymer (A), as determined according to ISO1133 may preferably be in the range of from 0.7 to 2.8 g/10min, more preferably 1.0 to 2.5 g/10min.

The MFR$_{21}$ of the ethylene copolymer (A), as determined according to ISO1133, may preferably be in the range 20 to 200 g/10min, more preferably 30 to 150 g/10min, even more preferably 40 to 120 g/10min, still more preferably 50 to 100 g/10min.

The flow rate ratio (FRR) of MFR$_{21}$ to MFR$_2$ is an indication on molecular weight distribution and to a certain extent also to processability. The ratio of MFR$_{21}$ to MFR$_2$ is understood as FRR $_{21/2}$.

The FRR$_{21/2}$ is preferably at least 25 or higher, preferably 27 or higher. The FRR$_{21/2}$ is 45 or below, preferably 40 or lower, e.g. 35 or below. It is thus preferred that the FRR$_{21/2}$ of the ethylene copolymer (A) is in the range of 25 to 45, more preferably in the range of 25 to 40, even more preferably in the range of 27 to 35.

It is preferred, if the ethylene copolymer (A) used in the present invention has a MFR$_{21}$, as determined according to ISO1133, may in the range of 50 - 100 g/10 min and/or a FRR$_{21/2}$ in the range of 25 to 35.

The weight average molecular weight Mw of the ethylene copolymer (A), as determined according to GPC measurements described herein, may preferably be in the range of 50,000 to 300,000 g/mol, more preferably in the range of 75,000 to 300,000 g/mol, even more preferably 80,000 to 270,000 g/mol.

The number average molecular weight Mn of the ethylene copolymer (A), as determined according to GPC measurements described herein, is preferably from 50,000 to 250,000, more preferably from 75,000 to 200,000 g/mol.

The z-average molecular weight Mz of the ethylene copolymer (A), as determined according to GPC measurements described herein, may preferably be in the range of from 150,000 to 750,000 g/mol, more preferably in the range of from 200,000 to 600,000 g/mol in the range of from 300,000 to 500,000 g/mol.

The Mw/Mn of the ethylene copolymer (A) may preferably be in the range of 3.5 to 6.0, more preferably in the range of 4.0 to 6.0.

The ratio of of z-average molecular weight to weight average molecular weight Mz/Mw of the ethylene copolymer (A) may preferably be in the range of from 2.0 to 6.0, more preferably in the range of from 3.0 to 4.5.

The ethylene copolymer (A) preferably has a rheological polydispersity index PI, as determined according to ISO standards 6721-1 and 6721-10, of from 0.55 to 1.0 Pa$^{-1}$, more preferably from 0.60 to 0.90 Pa$^{-1}$.

The ethylene copolymer (A) preferably has at least two distinctive melting peaks Tm1 and Tm2, as determined by differential scanning calorimetry (DSC) in accordance with ISO11357/part 3/method C2, wherein both Tm1 and Tm2 are preferably greater than 95 °C, more preferably greater than 100 °C.

The ethylene copolymer (A) preferably has a first melt enthalpy Hm1, as determined by differential scanning calorimetry (DSC) in accordance with ISO11357/part 3/method C2, of from 10 to 110 J/g, more preferably from 20 to 100 J/g, and most preferably from 30 to 80 J/g.

The ethylene copolymer (A) preferably has a second melt enthalpy Hm2, as determined by differential scanning calorimetry (DSC) in accordance with ISO11357/part 3/method C2, of from 10 to 200 J/g, more preferably from 30 to 180 J/g, and most preferably from 50 to 150 J/g.

The ethylene copolymer (A) preferably has a Hm ratio of from 20 to 90%, more preferably from 30 to 80% and even more preferably from 40 to 75%, wherein Hm ratio is calculated as following:

$$Hm\ ratio = \frac{Hm2}{Hm1 + Hm2}\ x\ 100$$

wherein Hm1 is the first melting enthalpy and Hm2 is the second melting enthalpy, both determined by differential scanning calorimetry (DSC) in accordance with ISO11357/part 3/method C2.

The ethylene copolymer (A) preferably has a crystallization temperature Tc, as determined by differential scanning calorimetry (DSC) in accordance with ISO11357/part 3/method C2, of from 95 to 120 °C, more preferably of from 100 to 115 °C.

The ethylene copolymer (A) preferably comprises a comonomer that is selected from the group consisting of $C_4$ to $C_8$ alpha-olefins, and more preferably is 1-octene.

The ethylene copolymer component (A) may also comprise a single comonomer, wherein the single comonomer may be selected from the above group.

The ethylene copolymer (A) may be produced in a polymerization process comprising any Ziegler-Natta catalyst known in the art. It is preferred when the ethylene copolymer (A) is produced using a Ziegler-Natta catalyst comprising a titanium compound, a magnesium compound and an internal donor which is a nonphthalic acid ester, optionally a co-catalyst and optionally an external donor.

The ethylene copolymer (A) may be produced by any known polymerization process; such as slurry, gas phase or solution or a combination thereof. It is particularly preferred when the ethylene copolymer (A) of the present invention is polymerized in a solution process, such as described in WO 2017/108969 A1.

Biaxially oriented polyethylene film

The biaxially oriented polyethylene film of the present invention can preferably have a thickness in the range of 5 - 100 μm, more preferably of 7 - 50 μm, and even more preferably of 10 - 30 μm.

The biaxially oriented polyethylene film according to the present invention achieves improved mechanical properties. Particularly, the stiffness in transverse direction (TD) is excellent. Preferably, the biaxially oriented polyethylene film has a tensile modulus in the machine direction (TM/MD), as determined according to ISO 527-3 on 21 μm film, in the range of 200 to 500 MPa, more preferably in the range of 250 to 400 MPa. It is also preferred when the biaxially oriented polyethylene film has a tensile modulus in the transverse direction (TM/TD), as determined according to ISO 527-3 on 21 μm film, in the range of 200 to 700 MPa, more preferably in the range of 250 to 500 MPa.

Preferably, the biaxially oriented polyethylene film according to the present invention has a ratio of tensile modulus in the machine direction (TM/MD) and tensile modulus in the transverse direction (TM/TD) in the range of from 0.5 to 1.5, more preferably in the range of from 0.6 to 1.0.

Preferably, the biaxially oriented polyethylene film according to the present invention has an elongation at break in machine direction (MD), as determined according to ISO 527-3 on 21 μm film, of from 70 to 250%, more preferably from 100 to 200%.

It is also preferred when the biaxially oriented polyethylene film according to the present invention has an elongation at break in transverse direction (TD), as determined according to ISO 527-3 on 21 μm film, of from 30 to 150%, more preferably from 50 to 100%.

The biaxially oriented polyethylene films of the present invention show good optical properties in view of haze and clarity when measured according to ASTM 1003 on 21 μm film. The haze preferably is from 0.1 to 10.0%, more preferably from 0.5 to 8%, even more preferably from 1 to 5%. The clarity of the biaxially oriented polyethylene films of the present invention preferably is from 85 to 100%, more preferably from 90 to 100%

The biaxially oriented film according to the present invention preferably has a dart drop impact DDI, as measured according to ISO 7765-1, method "A" at 23 °C on 21 μm film, of from 200 to 1000 g, more preferably from 250 to 500 g, and even more preferably from 300 to 450 g.

The biaxially oriented polyethylene films of the present invention may contain usual polymer additives, such as slip agents, UV-stabilisers, pigments, antioxidants, nucleating agents and so on. These additives may be carried on a carrier polymer in the form of a masterbatch.

It is envisaged that usual polymer additives, e.g. as described above may be present even when the film, (or even a film layer) essentially consists of the ethylene copolymer component (A). The term "consists of" is not intended therefore to exclude the presence of polymer additives. It does however exclude the presence of other polymer components for blending with the ethylene copolymer component (A). If a carrier polymer is used as part of a masterbatch, that is not excluded however. Films of the invention may be free of any other mixing polymers but may still comprise minor amounts of carrier polymer used for masterbatches.

The biaxially oriented polyethylene films of the present invention can be monolayer films or multilayer films. Multilayer films may comprise 2 or more layers, such as 3, 5, 7 or more layers.

If the biaxially oriented film is a multilayer film, the ethylene copolymer (A) may be present in a core layer or in any outer layer. In a preferred embodiment, the biaxially oriented film of the present invention is a multilayer film having a core and one or more adjacent layers (e.g. two outer layers), wherein the core layer comprises the ethylene copolymer (A) and the outer layers comprise low melting polyethylene grades (e.g. LLDPE) which have low density, and are suitable for good sealing behaviour. Suitable outer layers can comprise LLDPE, LDPE or other polyethylene grades, such as elastomers or plastomers preferably having a density of at most 929 kg/m$^3$, such as 860 to 925 kg/m$^3$, such as 875 - 920 kg/m$^3$. The person skilled is well aware what materials can be used as sealing layers.

The biaxially oriented films of the present invention can be laminated to other substrates to form a laminated structure. Suitable substrates include but are not limited to, biaxially oriented polypropylene film, oriented PET film, oriented polyamide film, blown and cast PE film, aluminum foil and paper. In particular, the substrate to which the biaxial film of the invention is laminated is a polyethylene film. In this way, the entire laminate is formed from polyethylene based polymers. Further preferred embodiments of laminates comprising the biaxially oriented polyethylene film of the present invention are described e.g. in EP 3 335 874 A1. Biaxial orientation is commonly understood as reheating an existing primary film in a second step with contemporaneous or sequential orientation in both transverse (TD) and machine direction (MD). Biaxial orientation may preferably carried out via double-bubble or flat film (cast film) processes. This can be done as described e.g. in EP 3 335 874 A1.

The process may further comprise laminating the resulting biaxially oriented polyethylene film to a substrate.

The manufacture of biaxially oriented films is well known and may be conducted e.g. by a tenter frame process. The components of the film are initially mixed and melted within an extruder. The temperature within the extruder is conventional and will be sufficient to ensure melting of the components. The extrudate is cast to form a cast film (or flat film) which is then cooled. The film may be cooled to a temperature of less than 50°C before any reheating process is begun.

The film may then be reheated and subjected to the stretching process. The temperature during the stretching phase can vary and may decrease as the stretching process continues. The MD reheat temperature is defined as the temperature at the start of the stretching process. Once stretching in the machine direction is complete, the film is annealed. This maintains the MDO film structure for the TD stretch. Reheating for the second stretching phase is carried out and again, the temperature can vary during the stretching phase. The TD reheat temperature is defined therefore as the temperature at the start of the second stretch procedure. Finally, the film is allowed to cool.

It is preferred that the MD stretch ratio is lower than the TD stretch ratio. A preferred MD stretch ratio is 1:3 to 1:8, such as 1:4 to 1:7. A preferred TD ratio is 1:5 to 1:12, such as 1:5.5 to 1:10.

**Examples**

**A. *Measurement and Determination Methods***

The following definitions of terms and measurement and determination methods apply to the above general description of the invention as well as to the below examples, unless otherwise indicated. Measurements on the biaxially oriented film in the examples were performed at a film thickness of 21 $\mu$m, unless otherwise indicated.

**a) Measurement of melt flow rate MFR**

The melt flow rate (MFR) was determined according to ISO 1133 and was indicated in g/10min. The higher the melt flow rate, the lower the viscosity of the polymer. The MFR is determined at 190°C for polyethylene and at a loading of 2.16 kg (MFR$_2$), or 21.6 kg (MFR$_{21}$).

The quantity FRR ((melt) flow rate ratio) is an indication of molecular weight distribution and denotes the ratio of flow rates at different loadings. Thus, FRR$_{21/2}$ denotes the value of MFR$_{21}$/MFR$_2$.

**b) Density**

Density of the polymer was measured according to ISO 1183-1:2004 (method A) on compression moulded specimen prepared according to EN ISO 1872-2 (Feb 2007) and is given in $kg/m^3$.

## c) Molecular weights and polydispersity

Molecular weight averages ($M_z$, $M_w$ and $M_n$), molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i x M_i)}{\sum_{i=1}^{N} A_i} \quad (2)$$

$$M_z = \frac{\sum_{i=1}^{N} (A_i x M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain)) or differential refractometer ((RI) from Agilent Technologies, equipped with 3 x Agilent-PLgel Olexis and 1x Agilent-PLgel Olexis Guard columns) was used. As mobile phase 1,2,4-trichlorobenzene (TCB) stabilized with 250 mg/L 2,6-Di tert-butyl-4-methyl-phenol) was used. The chromatographic system was operated at column temperature of 160°C and detector at 160°C and at a constant flow rate of 1 mL/min. 200 $\mu$L of sample solution was injected per analysis. Data collection was performed using either Agilent Cirrus software version 3.3 or PolymerChar GPC-IR control software.

The column set was calibrated using 19 narrow MWD polystyrene (PS) standards in the range of from 0.5 kg/mol to 11 500 kg/mol. The PS standards were dissolved at room temperature over several hours. The conversion of the polystyrene peak molecular weight to polyolefin molecular weights is accomplished by using the Mark-Houwink equation and the following Mark-Houwink constants:

$$K_{PS} = 19 \text{ x } 10^{-3} \text{ mL/g}, \quad \alpha_{PS} = 0.655$$

$$K_{PE} = 39 \text{ x } 10^{-3} \text{ mL/g}, \quad \alpha_{PE} = 0.725$$

A third order polynomial fit was used to fit the calibration data.

All samples were prepared in the concentration range of around 1 mg/ml and dissolved at 160°C for 3 (three) hours for PE in fresh distilled TCB stabilized with 250 ppm Irgafos168 under continuous gentle shaking.

## d) Comonomer content

The comonomer content was determined by quantitative nuclear magnetic resonance ($^{13}$C NMR) spectroscopy.

*Determination of 1-butene and 1-hexene content*

Quantitative $^{13}$C{$^1$H} NMR spectra recorded in the molten-state using a Bruker Avance III 500 NMR spectrometer operating at 500.13 and 125.76 MHz for $^1$H and $^{13}$C respectively. All spectra were recorded using a $^{13}$C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05, griffin07}. A total of 1024 (1k) transients were acquired per spectra.

Quantitative $^{13}$C{$^1$H} NMR spectra were processed, integrated and relevant quantitative properties determined from the integrals. All chemical shifts are internally referenced to the bulk methylene signal ($\delta+$) at 30.00 ppm {randall89}.

Characteristic signals corresponding to the incorporation of 1-butene were observed {randall89} and the comonomer fraction calculated as the fraction of 1-butene in the polymer with respect to all monomer in the polymer.

The amount of isolated 1-butene incorporated in EEBEE sequences was quantified using the integral of the *B2 sites [$I_{*B2}$] at 39.8 ppm accounting for the number of reporting sites per comonomer:

$$B = I_{*B2}$$

With no other signals indicative of other comonomer sequences, i.e. consecutive comonomer incorporation observed, the total 1-butene comonomer content was calculated based solely on the amount of isolated 1-butene sequences:

$$Btotal = B$$

The total mole fraction of 1-butene in the polymer was then calculated as:

$$fB = Btotal / ( Etotal + Btotal + Htotal )$$

Characteristic signals corresponding to the incorporation of 1-hexene were observed {randall89} and the comonomer fraction calculated as the fraction of 1-hexene in the polymer with respect to all monomer in the polymer.

The amount isolated 1-hexene incorporated in EEHEE sequences was quantified using the integral of the *B4 sites [$I_{*B4}$] at 38.2 ppm accounting for the number of reporting sites per comonomer:

$$H = I_{*B4}$$

With no other signals indicative of other comonomer sequences, i.e. consecutive comonomer incorporation observed, the total 1-hexene comonomer content was calculated based solely on the amount of isolated 1-hexene sequences:

$$Htotal = H$$

The total mole fraction of 1-hexene in the polymer was then calculated as:

$$fH = Htotal / ( Etotal + Btotal + Htotal )$$

The amount of ethylene was quantified using the integral of the bulk methylene ($\delta+$) sites at 30.00 ppm. This integral included the $\gamma$ site as well as the 3B4 sites from 1-hexene. The total ethylene content was calculated based on the bulk integral and compensating for the observed 1-butene and 1-hexene sequences and end-groups:

$$E = I_{\delta+} / 2$$

Characteristic signals resulting from saturated end-groups were observed. The content of such saturated end-groups was quantified using the average of the integral of the signals at 22.8 [$I_{2S}$] and 32.2 ppm [$I_{3S}$] assigned to the 2s and 3s sites respectively:

$$S = (1/2)*( I_{2S} + I_{3S} )$$

The presence of isolated comonomer units is corrected for based on the number of comonomer units and saturated end-groups present:

$$Etotal = E + (3/2)*B + (2/2)*H + (3/2)*S$$

The mole percent comonomer incorporation is calculated from the mole fraction:

$$B\ [mol\%] = 100 * fB$$

$$H\ [mol\%] = 100 * fH$$

The weight percent comonomer incorporation is calculated from the mole fraction:

$$B\ [wt\%] = 100 * (fB * 56.11) / ((fB * 56.11) + (fH * 84.16) + ((1-(fB + fH)) * 28.05))$$

$$H\ [wt\%] = 100 * (fH * 84.16) / ((fB * 56.11) + (fH * 84.16) + ((1-(fB + fH)) * 28.05))$$

randall89
J. Randall, Macromol. Sci., Rev. Macromol. Chem. Phys. 1989, C29, 201.
klimke06
Klimke, K., Parkinson, M., Piel, C., Kaminsky, W., Spiess, H.W., Wilhelm, M., Macromol. Chem. Phys. 2006;207:382.
parkinson07
Parkinson, M., Klimke, K., Spiess, H.W., Wilhelm, M., Macromol. Chem. Phys. 2007;208:2128.
pollard04
Pollard, M., Klimke, K., Graf, R., Spiess, H.W., Wilhelm, M., Sperber, O., Piel, C., Kaminsky, W., Macromolecules 2004;37:813.
filip05
Filip, X., Tripon, C., Filip, C., J. Mag. Resn. 2005, 176, 239
griffin07
Griffin, J.M., Tripon, C., Samoson, A., Filip, C., and Brown, S.P., Mag. Res. in Chem. 2007 45, S1, S198
castignolles09
Castignolles, P., Graf, R., Parkinson, M., Wilhelm, M., Gaborieau, M., Polymer 50 (2009) 2373

*Determination of 1-octene content*

Quantitative $^{13}C\{^{1}H\}$ NMR spectra recorded in the molten-state using a BrukerAvance III 500 NMR spectrometer operating at 500.13 and 125.76 MHz for $^{1}H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09, parkinson11}. Standard single-pulse excitation was employed utilising the transient NOE at short recycle delays of 3s {pollard04, klimke06} and the RS-HEPT decoupling scheme {fillip05,griffin07}. A total of 1024 (1k) transients were acquired per spectrum.

Quantitative $^{13}C\{^{1}H\}$ NMR spectra were processed, integrated and quantitative properties determined using custom spectral analysis automation programs. All chemical shifts are internally referenced to the bulk methylene signal ($\delta$ +) at 30.00 ppm {randall89}.

Characteristic signals corresponding to the incorporation of 1-octene were observed (randall89, liu01, qiu07) and all comonomer contents calculated with respect to all other monomers present in the polymer.

Characteristic signals resulting from isolated 1-octene incorporation i.e. EEOEE comonomer sequences, were observed. Isolated 1-octene incorporation was quantified using the integral of the signal at 38.3 ppm. This integral is assigned to the unresolved signals corresponding to both *B6 and $_{*}\beta$B6B6 sites of isolated (EEOEE) and isolated double non-consecutive (EEOEOEE) 1-octene sequences respectively. To compensate for the influence of the two $_{*}\beta$B6B6 sites the integral of the $\beta\beta$B6B6 site at 24.6 ppm is used:

$$O = I_{*B6+*\beta B6B6} - 2 * I_{\beta\beta B6B6}$$

When characteristic signals resulting from consecutive 1-octene incorporation, i.e. EEOOEE comonomer sequences, were observed such consecutive 1-octene incorporation was quantified using the integral of the signal at 40.4 ppm assigned to the $\alpha\alpha$B6B6 sites accounting for the number of reporting sites per comonomer:

$$OO = 2 * I_{\alpha\alpha B6B6}$$

When characteristic signals resulting from isolated non-consecutive 1-octene incorporation, i.e. EEOEOEE comonomer sequences, were observed such isolated non-consecutive 1-octene incorporation was quantified using the integral of the signal at 24.6 ppm assigned to the $\beta\beta B6B6$ sites accounting for the number of reporting sites per comonomer:

$$OEO = 2 * I_{\beta\beta B6B6}$$

When characteristic signals resulting from isolated triple-consecutive 1-octene incorporation, i.e. EEOOOEE comonomer sequences, were observed such isolated triple-consecutive 1-octene incorporation was quantified using the integral of the signal at 41.2 ppm assigned to the $\alpha\gamma\gamma B6B6B6$ sites accounting for the number of reporting sites per comonomer:

$$OOO = 3/2 * I_{\alpha\gamma\gamma B6B6B6}$$

With no other signals indicative of other comonomer sequences observed the total 1-octene comonomer content was calculated based solely on the amount of isolated (EEOEE), isolated double-consecutive (EEOOEE), isolated non-consecutive (EEOEOEE) and isolated triple-consecutive (EEOOOEE) 1-octene comonomer sequences:

$$O_{total} = O + OO + OEO + OOO$$

Characteristic signals resulting from saturated end-groups were observed. Such saturated end-groups were quantified using the average integral of the two resolved signals at 22.9 and 32.23 ppm. The 22.84 ppm integral is assigned to the unresolved signals corresponding to both 2B6 and 2S sites of 1-octene and the saturated chain end respectively. The 32.2 ppm integral is assigned to the unresolved signals corresponding to both 3B6 and 3S sites of 1-octene and the saturated chain end respectively. To compensate for the influence of the 2B6 and 3B6 1 -octene sites the total 1-octene content is used:

$$S = (1/2)*( I_{2S+2B6} + I_{3S+3B6} - 2*O_{total})$$

The ethylene comonomer content was quantified using the integral of the bulk methylene (bulk) signals at 30.00 ppm. This integral included the $\gamma$ and 4B6 sites from 1-octene as well as the $\delta^+$ sites. The total ethylene comonomer content was calculated based on the bulk integral and compensating for the observed 1-octene sequences and end-groups:

$$E_{total} = (1/2)*[ I_{bulk} + 2*O + 1*OO + 3*OEO + 0*OOO + 3*S ]$$

It should be noted that compensation of the bulk integral for the presence of isolated tripleincorporation (EEOOOEE) 1-octene sequences is not required as the number of under and over accounted ethylene units is equal.

The total mole fraction of 1-octene in the polymer was then calculated as:

$$fO = O_{total} / ( E_{total} + O_{total} )$$

The total comonomer incorporation of 1-octene in weight percent was calculated from the mole fraction in the standard manner:

$$O [wt\%] = 100 * (fO * 112.21) / ( (fO * 112.21) + ((1-fO) * 28.05) )$$

klimke06
Klimke, K., Parkinson, M., Piel, C., Kaminsky, W., Spiess, H.W., Wilhelm, M., Macromol. Chem. Phys. 2006;207:382.

parkinson07
Parkinson, M., Klimke, K., Spiess, H.W., Wilhelm, M., Macromol. Chem. Phys. 2007;208:2128.

parkinson11
NMR Spectroscopy of Polymers: Innovative Strategies for Complex

Macromolecules, Chapter 24, 401 (2011)

pollard04
Pollard, M., Klimke, K., Graf, R., Spiess, H.W., Wilhelm, M., Sperber, O., Piel, C., Kaminsky, W., Macromolecules 2004;37:813.

filip05
Filip, X., Tripon, C., Filip, C., J. Mag. Resn. 2005, 176, 239

griffin07
Griffin, J.M., Tripon, C., Samoson, A., Filip, C., and Brown, S.P., Mag. Res. in Chem. 2007 45, S1, S198

castignolles09
Castignolles, P., Graf, R., Parkinson, M., Wilhelm, M., Gaborieau, M., Polymer 50 (2009) 2373

zhou07
Zhou, Z., Kuemmerle, R., Qiu, X., Redwine, D., Cong, R., Taha, A., Baugh, D. Winniford, B., J. Mag. Reson. 187 (2007) 225

busico07
Busico, V., Carbonniere, P., Cipullo, R., Pellecchia, R., Severn, J., Talarico, G., Macromol. Rapid Commun. 2007, 28, 1128

randall89
J. Randall, Macromol. Sci., Rev. Macromol. Chem. Phys. 1989, C29, 201.

qiu07
Qiu, X., Redwine, D., Gobbi, G., Nuamthanom, A., Rinaldi, P., Macromolecules 2007, 40, 6879

liu01
Liu, W., Rinaldi, P., McIntosh, L., Quirk, P., Macromolecules 2001, 34, 4757

### e) *Tensile Modulus, Tensile Strength and Elongation at Break*

Film tensile properties (tensile modulus, tensile strength and elongation at break, all in MD and TD) were measured at 23°C according to ISO 527-3 with a specimen Type 2 on films obtained in experimental section with a thickness of 21 $\mu$m.

### g) Dart drop impact (DDI)

Impact resistance on film (DDI) was determined by Dart-drop (g/50%) on films obtained in experimental section with a thickness of 21 $\mu$m, at 23 °C. Dart drop was measured according to ISO 7765-1, method "A". A dart with a 38 mm diameter hemispherical head was dropped from a height of 0.66 m onto a film clamped over a hole. If the specimen fails, the weight of the dart is reduced and if it does not fail the weight is increased. At least 20 specimens were tested. The weight resulting in failure of 50% of the specimens was calculated.

### h) Haze and Clarity

Haze and clarity were determined on films obtained in experimental section with a thickness of 21 $\mu$m, according to ASTM D1003.

### i) Differential Scanning Calorimetry (DSC)

Melting temperature Tm (melting peaks Tm1 and Tm2), crystallization temperature Tc, and melting enthalpies Hm1 and Hm2 were measured with a TA instruments Q2000 differential scanning calorimetry device (DSC) according to ISO 11357/3 on 5 to 10 mg samples. DSC is run according to ISO11357/part 3/method C2 in a heat/cool/heat cycle with a scan rate of 10 °C/min in the temperature range of -30 to +225 °C. Melting temperature Tm and melt enthalpy Hm were determined from the second heating step, while the crystallization temperature Tc was determined from the cooling step.

**j) Rheological Properties**

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta^*$, the dynamic shear viscosity, $\eta'$, the out-of-phase component of the complex shear viscosity, $\eta''$ and the loss tangent, tan $\eta$, which can be expressed as follows:

$$G' = \frac{\sigma_0}{\gamma_0} \cos\delta \ [Pa] \qquad (3)$$

$$G'' = \frac{\sigma_0}{\gamma_0} \sin\delta \ [Pa] \qquad (4)$$

$$G^* = G' + iG'' \ [Pa] \qquad (5)$$

$$\eta^* = \eta' - i\eta'' \ [Pa \cdot s] \qquad (6)$$

$$\eta' = \frac{G''}{\omega} \ [Pa \cdot s] \qquad (7)$$

$$\eta'' = \frac{G'}{\omega} \ [Pa \cdot s] \qquad (8)$$

The determination of so-called Shear Thinning Index, which correlates with MWD and is independent of Mw, is done as described in equation 9.

$$SHI_{(x/y)} = \frac{Eta^* \text{ for } (G^* = x \text{ kPa})}{Eta^* \text{ for } (G^* = y \text{ kPa})} \qquad (9)$$

For example, the $SHI_{(2.7/210)}$ is defined by the value of the complex viscosity, in Pa s, determined for a value of G* equal to 2.7 kPa, divided by the value of the complex viscosity, in Pa s, determined for a value of G* equal to 210 kPa.

The $SHI_{(1/100)}$ is accordingly defined by the value of the complex viscosity, in Pa s, determined for a value of G* equal to 1 kPa, divided by the value of the complex viscosity, in Pa s, determined for a value of G* equal to 100 kPa.

The values of storage modulus (G'), loss modulus (G"), complex modulus (G*) and complex viscosity ($\eta^*$) were obtained as a function of frequency ($\omega$).

Thereby, e.g. $\eta^*_{300rad/s}$ (eta*$_{300rad/s}$) is used as abbreviation for the complex viscosity at the frequency of 300

rad/s and $\eta^*_{0.05rad/s}$ (eta$^*_{0.05rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s.

The elasticity balance $tan_{0.05}/tan_{300}$ is defined as the ratio of the loss tangent $tan_{0.05}$ and the loss tangent $tan_{300}$.

Besides the above mentioned rheological functions one can also determine other rheological parameters such as the so-called elasticity index $EI(x)$. The elasticity index $Ei(x)$ is the value of the storage modulus, G' determined for a value of the loss modulus, G" of x kPa and can be described by equation 10.

$$EI(x) = G' \ for \ (G'' = x \ kPa) \ [Pa] \qquad (10)$$

For example, the EI(5kPa) is the defined by the value of the storage modulus G', determined for a value of G" equal to 5 kPa, the EI(2kPa) is the defined by the value of the storage modulus G', determined for a value of G" equal to 2 kPa and the EI(0.5kPa) is the defined by the value of the storage modulus G', determined for a value of G" equal to 0.5 kPa.

The rheological polydispersity index, PI, is defined by equation 11.

$$PI = \frac{10^5}{G'(\omega_{COP})} , \qquad \omega_{COP} = \omega \ for \ (G'= G'') \qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

The so-called Zero Shear Viscosity (ZSV) is the plateau viscosity at low enough shear rate (angular frequency). It is determined by fitting the Carreau-Yasuda model on the complex viscosity versus angular frequency. The Carreau-Yasuda equation describes the viscosity curve of a material with Newtonian regions at low shear rates and a shear thinning (power law) region at medium shear rates. Fitting is done by Rheoplus or Rheocompass software by equation 12.

$$|\eta^*(\omega)| = \frac{\eta_0}{(1+(\lambda \ \omega)^a)^{\frac{n-1}{a}}} \qquad (12)$$

*where*

| | |
|---|---|
| $\omega$ | *angular frequency in rad/s* |
| $\eta^*$ | *complex viscosity in Pa s* |
| $\eta_0$ | *zero shear viscosity in Pa·s* |
| $a$ | *Carreau constant* |
| $n$ | *shear thinning exponent* |
| $\lambda$ | *relaxation time in s* |

As the ZSV (in low frequency regions) is not always fully reached within applied experimental conditions, the determination of the ZSV shall be done with special care to avoid extreme extrapolations, for example and thus, high errors.

For example, if the last experimental data point for the complex viscosity (e.g. at 0.01 rad/s) is about 70% of the calculated Zero Shear Viscosity ($\eta_0$) value by fitting of Carreau-Yasuda model, then the calculated ($\eta_0$) can be accepted. For cases in which the deviation is higher (last experimental complex viscosity < 70% of calculated ($\eta_0$), the ($\eta_0$) should not be reported. The estimation of the rheological behaviour at low frequencies, can be alternatively done, by providing the complex viscosity at an angular frequency of 0.05 rad/s (eta @0.05 rad/s).

References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.

[2] "The influence of molecular structure on some rheological properties of polyethylene", Heino, E.L., Borealis Polymers Oy, Porvoo, Finland, Annual Transactions of the Nordic Rheology Society, 1995.

[3] "Definition of terms relating to the non-ultimate mechanical properties of polymers", Pure & Appl. Chem., Vol. 70, No. 3, pp. 701-754, 1998.

**B. Materials**

**Preparation of polymers**

**LLDPE** - **1:** A copolymer of ethylene and 1-octene was polymerized in a solution polymerization process using a Ziegler-Natta catalyst as described in Example III of WO 95/09191 A1. The catalyst/donor feed inside the reactor (average) was butyloctylmagnesium in heptane (BOMAG), sesquiethylaluminum chloride (SEAC), tetrabutoxytitanium (TBT), 2-chlorobutane and triethyl aluminum (TEA) as activator. The typical conditions were following: $C_8/C_2$ ratio 0.8 kg/kg, $C_2$ conversion 96.5 %, $H_2/C_2$ ratio 0.25 $nm^3$/ton, reactor temperature 200°C. It was compounded with 450 ppm of Irganox 1010 (antioxidant, commercially available by BASF), 900 ppm of Irgafos 168 (antioxidant, commercially available by BASF), 200 ppm of Irganox 1076 (antioxidant, available by BASF), and 450 ppm of DHT 4V (synthetic hydrotalcite, commercially available by Kisuma/Kyowa).

**LLDPE** - **2** is obtained according to process described in WO 2022/129409 A1 (Preparation Example 1 presented in Table 1 and compounded as CE1 presented in Table 2 of WO 2022/129409 A1).

The final properties of LLDPEs are in Table 1.

**Table 1: Properties of polymers**

|  |  | IE1<br>LLDPE - 1 | CE1<br>LLDPE -2 |
|---|---|---|---|
| Density | kg/m³ | 919 | 918.5 |
| C4 | wt% | 0 | 0.5 |
| C6 | wt% | 0 | 8.3 |
| C8 | wt% | 11.1 | 0 |
| PI | [Pa⁻¹] | 0.77 | 0.5 |
| ZSV | [Pa.s] | 5086 | 8180 |
| MFR₂ | g/10min | 2.3 | 1.6 |
| MFR₂₁ | g/10min | 73.2 | 31 |
| MFR₂₁/MFR₂ | - | 31.8 | 19.4 |
| Tc | °C | 106 | 108 |
| Tm1 | °C | 124 | 122 |
| Tm2 | °C | 108 | 92 |
| Hm1 | J/g | 40 | 116 |
| Hm2 | J/g | 83 | 6 |
| Hm ratio | % | 67.5 | 4.9 |
| Mz | g/mol | 390000 | 179000 |
| Mw | g/mol | 98000 | 104000 |
| Mn | g/mol | 19700 | 42000 |

(continued)

|  |  | **IE1**<br>LLDPE - 1 | **CE1**<br>LLDPE -2 |
|---|---|---|---|
| Mz/Mw | - | 3.98 | 1.72 |
| Mw/Mn | - | 4.97 | 2.48 |

**Preparation of biaxially directed polyethylene films**

Biaxially oriented polyethylene films were produced on a pilot line. Generally, the pellets were molten and extruded into sheet, with melt temperature of 230°C. The thickness of the sheet was adjusted according to the stretch ratio in machine direction (MD) and transverse direction (TD) and final thickness. The sheet was cooled down and reheated to a chosen temperature, then it was stretched along the machine direction (MD), wherein the chosen of the temperature was selected by the person skilled in the art. The stretched sheet was cooled down, then it was reheated to another temperature, which was followed by stretching transverse to the machine direction (TD). The temperature of this step also was chosen by the person skilled in the art. The stretch ratio in MD and TD were adjusted to reach the best processing and properties.

For IE1, the MD stretch ratio was 6 and the highest stretch temperature was 125°C, while TD stretch ratio was 9 and the highest stretch temperature was 125°C. The properties of the films are presented in Table 2.

For CE1, similar stretch conditions as used for IE1 for MD stretch were applied, the quality of sheet was acceptable. However, in TD direction, the maximum stretch ratio was not more than 2 times and lots of film breakage was observed. As a result, there was no film collected for further test. Also the MD/TD stretching was varied, but was not successful.

**Table 2: Film properties measured for IE1**

|  |  | **IE1** |
|---|---|---|
| **TM/MD** | MPa | 278 |
| **TS/MD** | MPa | 108 |
| **Elogation/MD** | % | 153 |
| **TM/TD** | MPa | 386 |
| **TS/TD** | MPa | 117 |
| **Elogation/TD** | % | 83.7 |
| **TM/MD/TM/TD** | - | 0.72 |
| **Haze (%)** | % | 3.0 |
| **Clarity (%)** | % | 94.7 |
| **DDI (g)** | 9 | 391 |
| **Thickness** | $\mu$m | 21 |
| TS = tensile strength | | |

As can be seen in Table 2 above, the biaxially oriented polyethylene film of IE1 exhibits a combination of good mechanical properties in terms of tensile modulus, tensile strength, elongation and dart drop impact, as well as optical properties in terms of low haze and high clarity.

**Claims**

1. A biaxially oriented polyethylene film comprising a polyethylene composition comprising at least 50 wt.-% of an ethylene copolymer (A), based on the total weight of the polyethylene film, wherein the ethylene copolymer (A) has:

   a density, determined according to ISO 1183, in the range of from 910 to 940 kg/m$^3$,
   a melt flow rate MFR$_2$, determined according to ISO 1133 at 190 °C and at a loading of 2.16 kg in the range of from 0.5 to 3.0 g/10min,
a molecular weight distribution Mw/Mn, as determined according to GPC measurements described in the specification, in the range of from 3.5 to 6.5, and
a comonomer content, determined by quantitative nuclear-magnetic resonance ($^{13}$C NMR) spectroscopy, as described in the specification, in the range of from 1 to 20 wt.-%.

2. The biaxially oriented polyethylene film according to claim 1, wherein the ethylene copolymer (A) has a flow rate ratio (FRR) between $MFR_{21}$ and $MFR_2$ in the range of from 25 to 45,

   wherein $MFR_2$ is determined according to ISO 1133 at 190 °C and at a loading of 2.16 kg and
   $MFR_{21}$ is determined according to ISO 1133 at 190 °C and at a loading of 21.6 kg.

3. The biaxially oriented polyethylene film according to claim 1 or 2, wherein the ethylene copolymer (A) has at least two distinctive melting peaks Tm1 and Tm2, as determined by differential scanning calorimetry (DSC) in accordance with ISO11357/part 3/method C2, wherein both Tm1 and Tm2 are greater than 95 °C.

4. The biaxially oriented polyethylene film according to any of the preceding claims, wherein the ethylene copolymer (A) has a crystallization temperature Tc, as determined by differential scanning calorimetry (DSC) in accordance with ISO11357/part 3/method C2, of from 95 to 120 °C.

5. The biaxially oriented polyethylene film according to any of the preceding claims, wherein the ethylene copolymer (A) has a weight average molecular weight Mw, as determined according to GPC measurements described in the specification, of from 50,000 to 300,000 g/mol.

6. The biaxially oriented polyethylene film according to any of the preceding claims, wherein the ethylene copolymer (A) has a z-average molecular weight Mz, as determined according to GPC measurements described in the specification, of from 150,000 to 750,000 g/mol.

7. The biaxially oriented polyethylene film according to any of the preceding claims, wherein the ethylene copolymer (A) has a ratio of z-average molecular weight to weight average molecular weight Mz/Mw, as determined according to GPC measurements described in the specification, of from 2.0 to 6.0.

8. The biaxially oriented polyethylene film according to any of the preceding claims, wherein the ethylene copolymer (A) has a rheological polydispersity index PI, as determined according to ISO standards 6721-1 and 6721-10, of from 0.55 to 1.0 Pa-'.

9. The biaxially oriented polyethylene film according to any one of the preceding claims, wherein the ethylene copolymer (A) comprises a comonomer that is selected from $C_4$ to $C_8$ alpha-olefins, and preferably is 1-octene.

10. The biaxially oriented polyethylene film according to any one of the preceding claims, having a tensile modulus in the machine direction (TM/MD), as determined according to ISO 527-3 on 21 $\mu$m film, of from 200 to 500 MPa.

11. The biaxially oriented polyethylene film according to any one of the preceding claims, having a tensile modulus in the transverse direction (TM/TD), as determined according to ISO 527-3 on 21 $\mu$m film, of from 200 to 700 MPa.

12. The biaxially oriented polyethylene film according to any one of the preceding claims, having a ratio of tensile modulus in the machine direction (TM/MD) and tensile modulus in the transverse direction (TM/TD) in the range of from 0.5 to 1.5.

13. The biaxially oriented polyethylene film according to any one of the preceding claims, having:

    a) a haze value, as determined according to ASTM D1003 on 21 $\mu$m film, of from 0.1 to 10%; and/or
    b) a clarity value, as determined according to ASTM D1003 on 21 $\mu$m film, of from 85 to 100%.

14. The biaxially oriented polyethylene film according to any of the preceding claims, having a dart drop impact (DDI), as determined according to ISO 7765-1, method "A" at 23 °C on 21 $\mu$m film, of from 200 to 1000 g.

15. Use of the biaxially oriented film according to any one of the preceding claims in packaging applications.

**Europäisches Patentamt**
**European Patent Office**
**Office européen des brevets**

# EUROPEAN SEARCH REPORT

Application Number

EP 23 20 0542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/043678 A1 (SABIC GLOBAL TECHNOLOGIES BV [NL]) 11 March 2021 (2021-03-11) | 1,4-7, 9-12,14, 15 | INV. C08J5/18 C08F210/04 C08L23/08 |
| Y | * title; | 2,8 | |
| A | paragraph [0001]; claims; examples E1,E2; tables on pp. 11,13,14; compounds PE-1,PE-2 * | 3,13 | |
| X | WO 2021/119155 A1 (EXXONMOBIL CHEMICAL PATENTS INC [US]) 17 June 2021 (2021-06-17) | 1,3-7,9, 12-15 | |
| Y | * title; | 2,8 | |
| A | paragraphs [0002], [0149], [0195]; claims; examples I-1 4x8,I-1 5x8,I-2 5x8,I-2 5x9,I-2 5x10; tables 1-4; compounds I-1,I-2 * | 10,11 | |
| X | EP 3 015 502 A1 (CHINA PETROLEUM&CHEMICAL CORP [CN]; BEIJING RES INST CHEM IND [CN]) 4 May 2016 (2016-05-04) | 1,5-7,9, 12,13,15 | |
| Y | * title; | 2,8 | TECHNICAL FIELDS SEARCHED (IPC) |
| A | paragraphs [0002], [0019], [0138] – [0142], [0194] – [0197], [0106], [0093], [0037], [0049]; claims; examples 6,16; tables 3,4,7,8,10,12 * * paragraphs [0061], [0073], [0105] * | 3,4,10, 11,14 | C08J C08F C08L |
| X | CN 106 633 322 A (CHINA PETROLEUM & CHEM CORP ET AL.) 10 May 2017 (2017-05-10) | 1,5-7,9, 12,13,15 | |
| Y | * title,abstract; | 2,8 | |
| A | paragraphs [0051], [0030], [0029]; claims; example embodiment1; table 1 * | 3,4,10, 11,14 | |

-/--

The present search report has been drawn up for all claims

| Place of search | Date of completion of the search | Examiner |
|---|---|---|
| Munich | 12 March 2024 | Fodor, Csaba |

EPO FORM 1503 03.82 (P04C01)

## EUROPEAN SEARCH REPORT

Application Number

EP 23 20 0542

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "BIAXIALLY ORIENTED POLYETHYLENE FILMS AND PROCESS FOR PRODUCTION THEREOF ED  - Darl Kuhn", IP.COM, IP.COM INC., WEST HENRIETTA, NY, US, 4 December 2020 (2020-12-04), XP013188513, ISSN: 1533-0001 | 1,3-5,9, 14,15 | |
| Y | * title; | 2,8 | |
| A | paragraphs [0001], [0007], [0156]; examples samples A-G; tables B,C,4,A,1-3; compound product A * | 6,7, 10-13 | |
| | ----- | | |
| X | WO 2021/144136 A1 (SABIC GLOBAL TECHNOLOGIES BV [NL]) 22 July 2021 (2021-07-22) | 1,4-7,9, 10,12-15 | |
| Y | * title; | 2,8 | |
| A | tables in [0051],[0053] on pp. 13 and 14; tables in [0042] and [0043] on pp.9 and 10.; paragraph [0001]; claims; example E1; compound LLDPE * | 3,11 | |
| | ----- | | TECHNICAL FIELDS SEARCHED (IPC) |

The present search report has been drawn up for all claims

| Place of search | Date of completion of the search | Examiner |
|---|---|---|
| Munich | 12 March 2024 | Fodor, Csaba |

EPO FORM 1503 03.82 (P04C01)

EP 4 530 309 A1

## ANNEX TO THE EUROPEAN SEARCH REPORT
## ON EUROPEAN PATENT APPLICATION NO.

EP 23 20 0542

12-03-2024

| Patent document cited in search report | | | Publication date | Patent family member(s) | | | Publication date |
|---|---|---|---|---|---|---|---|
| WO 2021043678 | A1 | | 11-03-2021 | CN | 114364533 | A | 15-04-2022 |
| | | | | EP | 4025634 | A1 | 13-07-2022 |
| | | | | US | 2022298317 | A1 | 22-09-2022 |
| | | | | WO | 2021043678 | A1 | 11-03-2021 |
| WO 2021119155 | A1 | | 17-06-2021 | CN | 114787249 | A | 22-07-2022 |
| | | | | EP | 4073153 | A1 | 19-10-2022 |
| | | | | US | 2023024066 | A1 | 26-01-2023 |
| | | | | WO | 2021119155 | A1 | 17-06-2021 |
| EP 3015502 | A1 | | 04-05-2016 | BR | 102015027108 | A2 | 27-09-2016 |
| | | | | EP | 3015502 | A1 | 04-05-2016 |
| | | | | ES | 2619196 | T3 | 23-06-2017 |
| | | | | JP | 6615572 | B2 | 04-12-2019 |
| | | | | JP | 2016128557 | A | 14-07-2016 |
| | | | | KR | 20160049499 | A | 09-05-2016 |
| | | | | US | 2016115285 | A1 | 28-04-2016 |
| CN 106633322 | A | | 10-05-2017 | NONE | | | |
| WO 2021144136 | A1 | | 22-07-2021 | CN | 114945623 | A | 26-08-2022 |
| | | | | EP | 4090697 | A1 | 23-11-2022 |
| | | | | US | 2023347621 | A1 | 02-11-2023 |
| | | | | WO | 2021144136 | A1 | 22-07-2021 |

EPO FORM P0459

## REFERENCES CITED IN THE DESCRIPTION

### Patent documents cited in the description

- US 20090286024 A1
- WO 2021079255 A1
- WO 2013029233 A1
- WO 2017108969 A1
- EP 3335874 A1
- WO 9509191 A1
- WO 2022129409 A1

### Non-patent literature cited in the description

- **J. RANDALL**. *Macromol. Sci., Rev. Macromol. Chem. Phys.*, 1989, vol. C29, 201
- **KLIMKE, K.** ; **PARKINSON, M.** ; **PIEL, C.** ; **KAMINSKY, W.** ; **SPIESS, H.W.** ; **WILHELM, M.** *Macromol. Chem. Phys*, 2006, vol. 207, 382
- **PARKINSON, M.** ; **KLIMKE, K.** ; **SPIESS, H.W** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C**. *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45 (S1), S198
- **CASTIGNOLLES, P.** ; **GRAF, R** ; **PARKINSON, M.** ; **WILHELM, M.** ; **GABORIEAU, M.** *Polymer*, 2009, vol. 50, 2373
- **KLIMKE, K** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- Macromolecules. 2011, vol. 401
- **FILIP, X.** ; **TRIPON, C.** ; **FILIP, C.** *J. Mag. Resn.*, 2005, vol. 176, 239
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **ZHOU, Z.** ; **KUEMMERLE, R.** ; **QIU, X.** ; **REDWINE, D.** ; **CONG, R.** ; **TAHA, A.** ; **BAUGH, D** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **QIU, X** ; **REDWINE, D** ; **GOBBI, G.** ; **NUAMTHANOM, A.** ; **RINALDI, P.** *Macromolecules*, 2007, vol. 40, 6879
- **LIU, W.** ; **RINALDI, P.** ; **MCINTOSH, L.** ; **QUIRK, P.** *Macromolecules*, 2001, vol. 34, 4757
- **HEINO, E.L.** ; **LEHTINEN, A.** ; **TANNER J.** ; **SEPPÄLÄ, J.** ; **NESTE OY** ; **PORVOO** ; **FINLAND**. Rheological characterization of polyethylene fractions. *Theor. Appl. Rheol., Proc. Int. Congr. Rheol*, 1992, vol. 1, 360-362
- **HEINO, E.L.** ; **BOREALIS POLYMERS OY** ; **PORVOO** ; **FINLAND**. The influence of molecular structure on some rheological properties of polyethylene. *Annual Transactions of the Nordic Rheology Society*, 1995
- Definition of terms relating to the non-ultimate mechanical properties of polymers. *Pure & Appl. Chem.*, 1998, vol. 70 (3), 701-754